Europäisches Patentamt

European Patent Office

Office européen des brevets

(11) Numéro de publication: **0 099 792 B1**

## FASCICULE DE BREVET EUROPEEN

(45) Date de publication du fascicule du brevet:
13.11.85

(51) Int. Cl.4: **C 09 J 3/12**, C 09 J 3/14, C 08 L 13/02, C 08 L 25/14

(21) Numéro de dépôt: 83401347.6

(22) Date de dépôt: 30.06.83

(54) Dispersions aqueuses de résines synthétiques, leur utilisation comme liants dans les compositions adhésives et compositions adhésives obtenues.

(30) Priorité: 09.07.82 FR 8212067

(43) Date de publication de la demande:
01.02.84 Bulletin 84/5

(45) Mention de la délivrance du brevet:
13.11.85 Bulletin 85/46

(84) Etats contractants désignés:
AT BE CH DE FR GB IT LI LU NL SE

(56) Documents cités:
FR - A - 1 577 764
GB - A - 1 392 614
US - A - 3 380 938
US - A - 4 189 419

Le dossier contient des informations techniques présentées postérieurement au dépôt de la demande et ne figurant pas dans le présent fascicule.

(73) Titulaire: RHONE-POULENC SPECIALITES CHIMIQUES, "Les Miroirs" 18, Avenue d'Alsace, F-92400 Courbevoie (FR)

(72) Inventeur: Maronglu, Jacques, 12 rue Paul Bert, F-92400 Ivry (FR)

(74) Mandataire: Fabre, Madeleine-France et al, RHONE-POULENC RECHERCHES Service Brevets Chimie et Polymères 25, quai Paul Doumer, F-92408 Courbevoie Cedex (FR)

**Description**

La présente invention vise des dispersions aqueuses de mélanges de résines synthétiques, leur utilisation comme liants dans des compositions adhésives aptes à assembler ou contrecoller deux ou plusieurs éléments dont un au moins est constitué d'une matière difficile à coller telle que le polychlorure de vinyle, ainsi que les compositions adhésives obtenues.

Il est connu que l'asemblage ou le contrecollage de matières diverses telles que les fibres textiles, les cuirs synthétiques, les cartons ... sur un support en polychlorure de vinyle ou le collage sur un plancher ou sur un mur de revêtements à envers en polychlorure de vinyle est particulièrement difficile. Parmi les colles du commerce permettant de résoudre ce problème, on trouve des compositions adhésives à base de dispersions aqueuses de polymères d'esters acryliques particulièrement onéreuses. Il existe également des colles contenant des solvants organiques, ce qui soulève des problèmes d'hygiène et de sécurité du fait du risque d'inhalation des vapeurs de solvants par les manipulateurs et du fait de l'inflammabilité des dits solvants.

Les latex à base de terpolymères du type styrène/butadiène/acide acrylique ou styrène/acrylate de butyle/acide acrylique sont connus comme étant des liants pour compositions adhésives (brevet français n° 1 577 764); bien que pouvant être utilisées pour l'adhésion d'une grande diversité de substrats, les compositions adhésives obtenues sont toutefois insuffisantes pour le collage de matières telles que le polychlorure de vinyle. Il a été proposé d'améliorer les propriétés adhésives des liants à base de copolymères de butadiène/styrène carboxylés par addition d'un polymère d'acrylate ou de méthacrylate d'alkyle (brevet anglais n° 1 392 614); on a constaté que de tels liants sont encore insuffisants.

La demanderesse a mis au point des dispersions aqueuses de mélanges de résines synthétiques pouvant être utilisées comme liants pour assurer l'adhérence entre une matière quelconque et une matière difficile à coller telle que les polymères ou copolymères de chlorure de vinyle, et ce sans présenter les inconvénients ci-dessus indiqués.

La présente invention a donc pour objet à titre de produits industriels nouveaux des dispersions aqueuses de mélanges de résines synthétiques pouvant être utilisées comme liants dans des compositions adhésives.

Conformément à l'invention, les dispersions aqueuses sont constituées essentiellement d'un mélange de 20 à 80% en poids d'un latex d'un copolymère A de butadiène, styrène et d'au moins un acide carboxylique à insaturation éthylénique et de 80 à 20% en poids d'un latex d'un copolymère B de styrène, d'acrylate d'alkyle où l'alkyle est en $C_1$ à $C_8$ et, éventuellement, d'au moins un acide carboxylique à insaturation éthylénique.

Le copolymère A est constitué essentiellement, en poids de matière sèche du latex de A, de 40 à 70% de butadiène, 29 à 55% de styrène et 1 à 10% d'au moins un acide carboxylique à insaturation éthylénique et, de préférence 45 à 70% de butadiène, 40 à 50% de styrène et 2 à 5% d'au moins un acide carboxylique à insaturation éthylénique.

Le copolymère B est composé, en poids de matière sèche du latex de B, de 30 à 55% de styrène, 40 à 65% d'acrylate d'alkyle et 0 à 10% d'au moins un acide carboxylique à insaturation éthylénique et, de préférence, 35 à 45% de styrène, 50 à 60% d'acrylate d'alkyle où l'alkyle est en $C_2$ à $C_4$, et 1 à 5% d'au moins un acide carboxylique à insaturation éthylénique.

Parmi les acides carboxyliques à insaturation éthylénique entrant dans la composition du copolymère A et, éventuellement, du copolymère B, on peut citer notamment, les acides: acrylique, méthacrylique, crotonique, maléique, fumarique, itaconique, mésaconique, glutaconique et les dérivés chlorés de ces acides tels que les acides: chloroacrylique, chlorométhacrylique, chloromaléique, chlorofumarique et chloroitaconique, ou un mélange d'au moins deux de ces acides.

Selon une forme préférée de réalisation de l'invention, les dispersions aqueuses sont constituées essentiellement d'un mélange de 40 à 60% en poids du latex de copolymère A et de 60 à 40% en poids du latex de copolymère B.

Le latex de copolymère A et le latex de copolymère B avant d'être mélangés renferment généralement de 40 à 70% et, de préférence de 50 à 60% en poids de matières solides. Le mélange des latex de A et de B renferme généralement de 40 à 70% et, de préférence de 50 à 60% en poids de matières solides.

Le latex de copolymère A ainsi que le latex de copolymère B peuvent être préparés suivant tout procédé de polymérisation en émulsion aqueuse connu en soi.

Une fois les latex de A et de B préparés, leur mélange est effectué sous agitation à une température généralement comprise entre 10 et 80°C, de préférence entre 20°C et 30°C et dans les proportions ci-dessus indiquées.

La présente invention a également pour objet l'utilisation des dispersions aqueuses ci-dessus décrites comme liants dans des compositions adhésives aptes à assembler ou contrecoller deux ou plusieurs éléments dont un au moins est constitué d'une matière difficile à coller; elle vise également les compositions adhésives ainsi obtenues qui sont tout particulièrement intéressantes pour résoudre les problèmes d'adhérence de matières diverses aux résines à base de polymères ou de copolymères de chlorure de vinyle.

Les compositions adhésives faisant l'objet de l'invention peuvent être utilisées dans différents types d'application, par exemple:

— pour la réalisation de revêtements muraux par collage sur un sous-bassement en polychlorure de vinyle cellulaire (apportant solidité et isolation phonique) d'un matériau textile décoratif tissé ou non-tissé;
— pour la fabrication de revêtements de sol par enduction d'une couche d'usure en polychlorure de vinyle à l'aide du mélange des latex A et B fortement chargé puis séchage;
— pour la fabrication de tapis touffetés avec sous-couche en polychlorure de vinyle cellulaire par enduction d'envers du tapis touffeté à d'aide du mélange de latex A et B fortement chargé, séchage puis enduction par du polychlorure de vinyle cellulaire.

Elles sont en particulier intéressantes pour la confection de revêtements de sols ou muraux connus sous le nom de »Vinyl expansé relief« et obtenus par enduction ou calandrage de polychlorure de vinyle ou de copolymère chlorure de vinyle-acétate de vinyle sur un support fibreux réalisé au préalable par voie papetière, par voie fondue (spunbonded) ou par voie textile; les dites compositions adhésives selon l'invention sont bien adaptées pour effectuer l'adhérence entre les deux parties constituantes de l'ensemble.

Les compositions adhésives selon l'invention conviennent également particulièrement bien pour le collage des revêtements de sol à envers en polymère ou copolymère de chlorure de vinyle sur un plancher, en béton par exemple.

Les dites compositions adhésives comportent comme liant une dispersion aqueuse telle que décrite ci-dessus c'est-à-dire constituée d'un mélange des latex A et B, ainsi que les adjuvants usuels présents dans les formulations de colles. Le rapport pondéral adjuvants/matières solides du liant est généralement compris entre 1 et 10.

Les adjuvants usuels sont des agents de dispersion, des colloïdes protecteurs, des plastifiants, des agents de coalescence, des solvants polaires, des charges minérales, des agents réticulants, des épaississants et des agents poissants, la nature et les quantités des dits adjuvants à mettre en oeuvre étant fonction de l'application particulière recherchée.

Les charges minérales comprennent notamment du kaolin, du carbonate de calcium, du gypse, de la silice, du talc pris séparément ou en mélange d'au moins deux de ces composés. La taille des particules de charge est généralement comprise entre 5 et 100 µm avec un diamètre moyen de particules inférieur à 50 µm et, de préférence, de 5 à 15 µm.

L'un des agents poissants usuels est la colophane.

Comme agents dispersants le pyrophosphate tétrasodique, l'hexamétaphosphate de sodium et les polyacrylates de bas poids moléculaire sont les plus importants.

Les plastifiants, agents de coalescence, réticulants, épaississants, colloïdes protecteurs, solvants polaires et autres adjuvants usuels, sont choisis parmi ceux habituellement utilisés dans la formulation de colles et, plus particulièrement, phtalate de butyle, phtalate de dioctyle, white-spirit, essence de thérébenthine, carboxyméthylcellulose, polyacrylates de métaux alcalins, glyoxal, résines formophénoliques.

Les compositions adhésives pour le collage de revêtements de sol sur béton pourront favorablement contenir notamment: un taux de charges minérales correspondant à un rapport pondéral charges minérales/matières solides du liant compris entre 2 et 4; une quantité de colophane correspondant à un rapport pondéral colophane/matières solides du liant compris entre 0,2 et 0,4; et éventuellement une part minime de solvant polaire corespondant à un rapport pondéral solvant + agent de coalescence + plastifiant/matières solides du liant compris entre 0,1 et 0,3.

Au point de vue des propriétés physiques des compositions adhésives pour le collage des revêtements de sol sur béton, il est avantageux qu'elles présentent un pH inférieur à 8 et, de préférence, de 4 à 7 ou très voisin de 7; une viscosité de 5000 à 100 000 mPa·s et, de préférence, de 15 000 à 100 000 mPa·s et tout particulièrement de 15 000 à 60 000 mPa·s; et un extrait sec mesuré d'après la norme française NFT 51 054 (105°C, 2 heures) jusqu'à 90%.

Les exemples ci-après ont pour but d'illustrer l'invention.

Dans ces exemples, une série de tests a été effectuée sur des revêtements de sol à envers en différentes matières, afin d'évaluer la qualité du collage.

Ces tests sont les suivants

### 1) Test de résistance à l'arrachement (dit de pelage) à 20°C sous un angle de 180°C

Il a pour but de mesurer la résistance de collages.

Une plaque support de fibrociment de dimensions 7,5 × 20 cm ragréée avec de l'ARDIT comme enduit et contenant l'adjuvant IBO (ces 2 marques étant déposées et les produits fabriqués par la Société Weber et Broutin — 77170 SERVON France), est séchée 24 heures à 20°C.

La suite des opérations est effectuée, sauf indications contraires, dans un local conditionné à 20°C

3

et 65% d'humidité relative.

A l'aide d'une racle crantée (modèle de la Société Weber et Broutin) on enduit 5 plaques supports de fibrociment de 350—400 g/m² de colle à tester. Au bout de 2 minutes, on assemble simultanément les 5 plaques supports et 5 échantillons identiques de revêtement de sol préalablement découpés en bande dans le sens de la longueur en éprouvettes de 5 × 45 cm et encollés à la râcle crantée sur une surface de (5 × 15) cm². On empile immédiatement ces 5 assemblages et applique une pression de 25 g/cm² (2,4 × 10³ Pa) pendant 10 minutes sur la surface de l'éprouvette supérieure de l'empilage.

La mesure de la résistance à l'arrachement du joint de colle ou au pelage sous un angle de 180° est réalisée au moyen d'un dynamomètre dont la vitesse de déplacement des mâchoires est de 100 mm/minute.

La mesure des forces de pelage est effectuée sur:

— 5 éprouvettes collées aux 5 plaques supports, comme décrit ci-dessus et conditionnées 7 jours à 20° C et 65% d'humidité relative,

— 5 autres éprouvettes collées à 5 plaques supports également comme décrit ci-dessus, d'abord conditionnées 7 jours à 20° C et 65% d'humidité relative puis, 5 jours à 55° C en étuve sèche et, enfin, 1 jour à 20° C et 65% d'humidité relative.

Les résultats sont exprimés en da N/5 cm.

### 2) Détermination du pouvoir poissant (ou piègeant)

Il s'agit d'une méthode en usage dans la profession consistant à effectuer un collage d'un support défini avec un revêtement défini, tout en appliquant de façon déterminée, une plaque dite de »marouflage« sur le revêtement avant et après avoir posé ce revêtement sur ledit support enduit de la colle à tester.

Le mode opératoire est le suivant: une plaque support de fibrociment de dimensions 7,5 × 20 cm ragrée avec de l'ARDIT et contenant l'adjuvant IBO (ces 2 marques étant des produits fabriqués par la Société Weber et Broutin 77170 — SERVON, France) est séchée 24 heures à 20° C.

La suite des opérations est effectuée dans un local conditionné à 20° C et 65% d'humidité relative.

A l'aide d'une racle crantée, on enduit la plaque support de fibrociment de 350—400 g/m² de colle à tester.

On découpe dans le sens de la longueur un échantillon de revêtement de sol à envers en mat de non-tissé polyester préparé par voie fondue à coller (de marque déposée BICONFORT et fabriqué par la Société SOMMER S.A. — 92200 NEUILLY, France) en éprouvette de 80 × 100 mm. On plie en deux cette éprouvette en son milieu dans le sens de la largeur face extérieure contre face extérieure. A l'aide de la plaque de marouflage lestée au plomb d'un poids de 2 kg et de dimensions 80 × 100 mm et 20 mm d'épaisseur, on écrase le pliage de l'éprouvette de revêtement pendant 5 minutes.

5 minutes après le dépôt de colle sur la plaquette support de fibrociment, on applique l'éprouvette dépliée de revêtement.

Ensuite, on applique sur cette éprouvette la plaque de marouflage pendant 10 secondes. Si dans les 20 secondes suivantes on observe que l'éprouvette se relève, on recommence l'application de la plaque de marouflage sur l'éprovette pendant 10 secondes et on observe à nouveau si l'échantillon se relève. Ces deux opérations se répètent 10 fois au maximum.

On effectue dans les mêmes conditions d'autres applications d'éprouvettes de revêtement de sol à des temps d'attente avant collage espacés de 5 minutes et jusqu'à 60 minutes maximum.

On note, pour un temps d'attente donné avant collage, le nombre de fois où l'éprouvette de revêtement se relève. Le pouvoir poissant est mauvais si le revêtement se relève 5 fois: on lui attribue une note égale à 5. S'il se relève 10 fois, on lui attribue la note 0. Un bon pouvoir poissant correspond à un nombre de relevés de 0 à 3 et à une note de 10 à 7.

### 3) Temps de gommage

Au cours du test de mesure du pouvoir poissant, on note qu'au bout d'un certain temps d'attente entre l'application de la colle et la réalisation du collage, le pouvoir poissant est maximum et ne varie plus tout au long du temps de travail. Ce temps d'attente représente la valeur optimale du temps de gommage. C'est donc l'intervalle de temps qui s'écoule entre le moment où l'on dépose la colle et le moment où le pouvoir poissant est jugé satisfaisant.

### 4) Temps ouvert

Le test du pouvoir poissant est poursuivi jusqu'à ce qu'il n'y ait plus de transfert visible sur l'envers de l'éprouvette de revêtement par le film de colle. On observe jusqu'à quel temps, le mouillage de la colle à l'envers de l'éprouvette de revêtement est satisfaisant pour obtenir un bon collage. Dans ce but, on adopte la notation suivante:

5 correspond à un mouillage sur toute l surface de l'envers de l'éprouvette,
4 correspond à un mouillage sur les trois-quarts de la surface de l'envers de l'éprouvette,
3 correspond à un mouillage sur la moitié de la surface de l'envers de l'éprouvette,
2 correspond à un mouillage sur le quart de la surface de l'envers de l'éprouvette,
1 correspond à un mouillage sur quelques points de la surface de l'envers de l'éprouvette,
0 correspond à un mouillage nul.

En pratique, le temps ouvert de la colle sera le temps pour lequel on attribue la note de 1.

### 6) Temps de travail

C'est le temps ouvert diminué du temps de gommage.

### 7) Détermination d'extrait sec des latex

Suivant la norme française NFT 5 1054.

### 8) Détermination de la viscosité des colles

La viscosité est mesurée au moyen d'un appareil Brookfield RVT à 50 tours/minute.

### Exemple 1

On prépare par polymérisation en émulsions aqueuse de butadiéne, styréne, acide fumarique et acide acrylique, un latex de copolymère A à 50% d'extrait sec, ledit copolymère étant composé de 48% en poids d'unités de butadiène, 48% en poids d'unités de styrène, 2% en poids d'unités d'acide fumarique et 2% en poids d'unités d'acide acrylique.

On prépare par polymérisation en émulsion aqueuse de styrène, acrylate de n-butyle et acide acrylique, un latex de copolymère B à 50% d'extrait sec, ledit copolymère étant composé de 45% en poids d'unités de styrène, 50% en poids d'unités d'acrylate de n-butyle et 5% en poids d'unités d'acide acrylique.

On mélange 60 parties en poids du latex de copolymère A et 40 parties en poids du latex de copolymère B et agite, de façon à obtenir une composition homogène des deux latex.

Ce mélange est incorporé, comme liant, aux ingrédients indiqués ci-dessous pour la préparation d'une colle de revêtement de sol dont la composition pondérale est la suivante:

| | | |
|---|---|---|
| — | Mélange de latex de copolymère A et de copolymère B a 50% d'extrait sec | 200 |
| — | Silice (diamètre moyen des particules 40 µm | 200 |
| — | Kaolin (diamètre moyen des particules 2 µm environ) | 50 |
| — | Colophane | 56 |
| — | White Spirit | 14 |
| — | Essence de térébenthine | 10 |
| — | Dioctylphtalate | 4 |
| — | Solution de carboxyméthylcellulose (commercialisée sous la marque Blanose R190 déposée par NOVACEL) à 5% en poids | 2 |
| — | Solution aqueuse d'hexamétaphosphate de sodium à 10% en poids | |

Le rapport pondéral colophane/latex $= \dfrac{56}{200} = 0,28$

Le rapport pondéral White-Spirit + essence de térébenthine +

dioctylphtalate/liant $= \dfrac{28}{100} = 0,28$

Le rapport pondéral charges minérales/liant $= 250/100 = 2,5$

La viscosité de cette colle mesurée avec un appareil Brookfield RVT à 50 tours/minute est de 29 600 mPa·s.

On a effectué avec la colle ci-dessus, des collages de divers revêtements de sol dont l'envers était de différentes natures. Le tableau 1 suivant, résume les résultats de ces essais de collage.

Tableau 1

| Nature de l'envers du revêtement du sol | Test de résistance à l'arrachement après séchage 7 jours à 20° C en daN/5 cm | Test de résistance à l'arrachement après séchage 7 jours à 20° C puis 5 jours à 55° C et 1 jour à 20° C en daN/5 cm |
|---|---|---|
| Poly(chlorure de vinyle) plastifié Taraflex »S«*) | 2,65 | 5,4 |
| Mousse de caoutchouc styrène-butadiène | arrachement de la mousse | arrachement de la mousse |
| Mousse en polyuréthane | arrachement de la mousse | arrachement de la mousse |
| Poly(chorure de vinyle alvéolé | 7,4 | 7,3 |
| Poly(chlorure de vinyle) alvéolé (autre qualité) | 15,75 | 14,5 |
| Feutre | 9,5 | 15 |
| Feutre (autre qualité) | 9,25 | 11,6 |
| Carton amiante | arrachement carton | arrachement carton |
| Aiguelleté Sommer S600**) | 6,3 | 8,25 |

*) Marque déposée par B.A.T. (Tarare).
**) Marque déposée par SOMMER.

A titre de comparaison, on a effectué des essais de collages d'un revêtement de sol à envers en poly(chlorure de vinyle) plastifié (Taraflex S du Tableau 1) avec des colles de même formulation que celle indiquée dans l'exemple 1, sauf que le mélange de latex de copolymère A et de copolymère B a été remplacé, dans un cas, par la même quantité mais de latex A seul, et dans l'autre cas, par la même quantité mais de latex B seul.

On a également testé le collage avec une colle de même formulation mais en remplacant le mélange de latex A et B par un latex de polyacrylate de 2-éthylhexyle commercial présentant une température de début de transition vitreuse de −51°C.

Le tableau 2 suivant résume les résultats des essais comparatifs.

Tableau 2

| Nature de la dispersion aqueuse | | | | | Test de résistance à l'arrachement après séchage 7 jours à 20°C en daN/5 cm | Test de résistance à l'arrachement après séchage 7 jours à 20°C puis 5 jours à 55°C et 1 jour à 20°C en daN/5 cm |
|---|---|---|---|---|---|---|
| Sty-réne | Buta-diène | acides fuma-rique | acry-lique | acrylate de butylene | | |
| Copolymere A | | | | | | |
| 50 | 48 | 1 | 1 | — | 0,4 | 0,1 |
| 48 | 48 | 2 | 2 | — | 0,2 | 0,1 |
| 50 | 48 | 1 | 1 | — | 0 | 0 |
| Copolymere B | | | | | | |
| 45 | — | — | 5 | 50 | 0,4 | 0,3 |
| 36 | — | — | 4 | 60 | 0,5 | 0,3 |
| 45 | — | — | 5 | 50 | 0,5 | 1,0 |
| 45 | — | — | 5 | 50 | 0,4 | 0,6 |
| Mélange copolymère A + copolymère B 40/60 selon l'invention | | | | | 2,65 | 5,4 |
| Poly(acrylate de 2-éthylhexyle) | | | | | 2,0 | 1,4 |

On observe que le mélange liant selon l'invention, permet un collage de revêtement de sol à envers en poly(chlorure de vinyle) considérablement plus résistant à l'arrachement que celui obtenu avec chacun des latex constitutifs du mélange, utilisés séparément ou même avec une colle à base de polyacrylate de 2-éthylhexyle).

Exemple 2

On utilise le mélange de latex de l'exemple 1 comme liant pour la préparation d'une colle de revêtement de sol dont la composition pondérale est la suivante:

— Mélange de latex de l'exemple 1 à 50% d'extrait sec      200
— Carbonate de Ca (diamètre moyen des particules 5 μm)      200
— Colophane      56
— Térébenthine      14
— White Spirit      10
— Dioctylphtalate      4
— Solution de carboxyméthylcellulose (commercialisée sous la marque déposée de Blanose R 190) à 5% en poids      2,1
— Solution aqueuse d'hexamétaphosphate à 10% en poids      10

$$\text{Rapport pondéral colophane/latex} = \frac{56}{200} = 0,28$$

$$\text{Rapport pondéral White Spirit + essence de térébenthine +}$$
$$\text{dioctylphtalate/liant} = \frac{28}{100} = 0,28$$

$$\text{Rapport pondéral charge minérale/liant} = \frac{200}{100} = 2$$

Viscosité de la colle mesurée avec un appareil Brookfield RVT à 50 tours/minute = 99 200 mPa·s.

On a mis en oeuvre cette colle pour la fixation d'un revêtement de sol à envers en polychlorure de vinyle plastifié (Taraflex S utilisé dans l'exemple 1).

Les résultats d'essais de résistance à l'arrachement ou au pelage sont les suivants:

| | |
|---|---|
| Résistance à l'arrachement après séchage 2 jours à 20° C en daN/5 cm | 4,1 |
| Résistance à l'arrachement après séchage 7 jours à 20° C, puis 5 jours à 55° C et 1 jour à 20° C en daN/5 cm | 8,5 |

## Exemple 3

Dans la composition de la colle de l'exemple 2, on a remplacé les 200 g de particules de 5 μm de diamètre moyen de carbonate de Ca, par 250 g de particules de 10 μm de diamètre moyen.

La viscosité de la colle mesurée comme dans l'exemple 2 était de 60 200 mPa · s.

Des essais de collage ont été réalisés avec le revêtement de l'exemple 2.

La résistance à l'arrachement après séchage 7 jours à 20° C était de 3,8 daN/5 cm.

La résistance à l'arrachement après séchage 7 jours à 20° C, puis 5 jours à 55° C et 1 jour à 20° C était de 6,7 daN/5 cm.

## Exemple 4

Dans la composition de colle mise en oeuvre dans l'exemple 3, on n'a incorporé que 0,7 partie de la solution de carboxyméthylcellulose au lieu de 2.

La viscosité de la colle mesurée comme dans l'exemple 3, était de 19 200 mPa · s.

Après essais de collage du revêtement de l'exemple précédent, on à trouvé que la résistance à l'arrachement après séchage 7 jours à 20° C, était de 3,45 daN/5 cm, puis après séchage 5 jours à 55° C et 1 jour à 20° C, cette résistance était de 4,4 daN/5 cm.

| | |
|---|---|
| — Temps de gommage | 5 minutes |
| — Temps ouvert | 35 minutes |
| — Temps de travail | 30 minutes |
| — Pouvoir poissant bon à | 35 minutes |

## Exemple 5

Dans la préparation de la composition de colle de l'exemple 4, on a remplacé la carboxymethylcellulose par 0,7 g de polyacrylate de sodium commercialisé sous la marque déposée par la Société PROTEX d'Acrylron A 300.

La viscosité de la colle mesurée comme dans l'exemple 4, était de 23 200 mPa · s.

Le revêtement de l'exemple 4 a été soumis aux essais de collages dont les résultats sont les suivants:

| | |
|---|---|
| — Résistance à l'arrachement après séchage 7 jours à 20° C | 3,35 daN/5 cm |
| — puis après séchage 7 jours à 55° C et 1 jour à 20° C | 5,6 daN/5 cm |
| — Temps de gommage en minutes | 5 |
| — Temps ouvert en minutes | 25 |
| — Temps de travail en minutes | 20 |
| — Pouvoir poissant bon à | 20 minutes |

## Exemple 6

On a repris la composition de colle de l'exemple 3 mais en y ajoutant de l'eau de manière à porter sa viscosité à 52 000 mPa · s.

Les mêmes essais de collage avec le même revêtement que celui de l'exemple 3 ont donné les résultats suivants:

| | |
|---|---|
| — Résistance à l'arrachement après séchage 7 jours à 20° C | 3,4 daN/5 cm |
| — puis après séchage 5 jours à 55° C et 1 jour à 20° C | 6 daN/5 cm |
| — Temps de gommage en minutes | 5 |
| — Temps ouvert en minutes | 20 |
| — Temps de travail en minutes | 15 |
| — Pouvoir poissant bon jusqu'à | 15 minutes |

**Revendications pour les Etats contractants: BE, CH, DE, FR, GB, IT, LI, LU, NL, SE**

1. Dispersions aqueuses de résines synthétiques, caractérisées en ce qu'elles sont constituées d'un mélange de 20 à 80% en poids d'un latex d'un copolymère A constitué de 40 à 70% en poids de butadiène, de 29 à 55% en poids de styrène et de 1 à 10% en poids d'au moins un acide carboxylique éthyléniquement insaturé et de 80 à 20% en poids d'un latex d'un copolymère B constitué de 30 à 55% en poids de styrène, de 40 à 65% en poids d'acrylate d'alkyle présentant un radical alkyle en $C_1 - C_8$ et de 0 à 10% d'au moins un acide carboxylique éthyléniquement insaturé.

2. Dispersions selon la revendication 1 caractérisées en ce que le copolymère A est constitué de 45 à 70% en poids de butadiène, de 40 à 50% en poids de styrène et de 2 à 5% d'acide carboxylique éthyléniquement insaturé.

3. Dispersions selon la revendication 1 caractérisées en ce que le copolymère B est constitué de 35 à 45% en poids de styrène, de 50 à 60% en poids d'acrylate d'alkyle et de 1 à 5% en poids d'acide carboxylique éthyléniquement insaturé.

4. Dispersions selon l'une quelconque des revendications précédentes caractérisées en ce que l'acrylate d'alkyle présente un radical alkyle en $C_2 - C_4$.

5. Dispersions selon l'une quelconque des revendications précédentes caractérisées en ce que l'acide carboxylique éthyléniquement insaturé est l'acide acrylique, méthacrylique, crotonique, maléïque, fumarique, itaconique, mésaconique, glutaconique ou ses dérivés chlorés.

6. Dispersions selon l'une quelconque des revendications précédentes caractérisées en ce qu'elles sont constituées d'un mélange de 40 à 60% en poids d'un latex de copolymère A et de 60 à 40% en poids d'un latex de copolymère B.

7. Dispersions selon l'une quelconque des revendications précédentes caractérisées en ce qu'elles contiennent de 40 à 70% de matière sèche, en ce que le latex de copolymère A contient de 40 à 70% de matière sèche, et en ce que le latex de copolymère B contient de 40 à 70% de matière sèche.

8. Application des dispersions aqueuses faisant l'objet de l'une quelconque des revendications précédentes comme liants pour compositions adhésives.

9. Compositions adhésives caractérisées en ce qu'elles sont constituées d'une dispersion aqueuse faisant l'objet de l'une quelconque des revendications 1 à 9 et d'adjuvants pour colles selon un rapport pondéral adjuvants/matière sèche de ladite dispersion aqueuse compris entre 1 et 10.

**Revendications pour l'Etat contractant : AT**

1. Procédé de préparation de dispersions aqueuses de résines synthétiques, caractérisé en ce qu'on mélange de 20 à 80% en poids d'un latex d'un copolymère A constitué de 40 à 70% en poids de butadiène, de 29 à 55% en poids de styrène et de 1 à 10% en poids d'au moins un acide carboxylique éthyléniquement insaturé et de 80 à 20% en poids d'un latex d'un copolymère B constitué de 30 à 55% en poids de styrène, de 40 à 65% en poids d'acrylate d'alkyle présentant un radical alkyle en $C_1 - C_8$ et de 0 à 10% d'au moins un acide carboxylique éthyléniquement insaturé.

2. Procédé selon la revendication 1 caractérisé en ce que le copolymère A est constitué de 45 à 70% en poids de butadiène, de 40 à 50% en poids de styrène et de 2 à 5% d'acide carboxylique éthyléniquement insaturé.

3. Procédé selon la revendication 1 caractérisé en ce que le copolymère B est constitué de 35 à 45% en poids de styrène, de 50 à 60% en poids d'acrylate d'alkyle et de 1 à 5% en poids d'acide carboxylique éthyléniquement insaturé.

4. Procédé selon l'une quelconque des revendications précédentes caractérisé en ce que l'acrylate d'alkyle présente un radical alkyle en $C_2 - C_4$.

5. Procédé selon l'une quelconque des revendications précédentes caractérisé en ce que l'acide carboxylique éthyléniquement insaturé est l'acide acrylique, méthacrylique, crotonique, maléïque, fumarique, itaconique, mésaconique, glutaconique ou ses dérivés chlorés.

6. Procédé selon l'une quelconque des revendications précédentes caractérisé en ce qu'on mélange de 40 à 60% en poids d'un latex de copolymère A et de 60 à 40% en poids d'un latex de copolymère B.

7. Procédé selon l'une quelconque des revendications précédentes caractérisé en ce que lesdites dispersions aqueuses contiennent de 40 à 70% de matière sèche, en ce que le latex de copolymère A contient de 40 à 70% de matière sèche, et en ce que le latex de copolymère B contient de 40 à 70% de matière sèche.

8. Procédé selon l'une quelconque des revendications précédentes caractérisé en ce que le mélange est réalisé à une température de 10 à 80° C.

9. Procédé selon la revendication 10 caractérisé en ce que le mélange est réalisé à une température de 20 à 30° C.

10. Application des dispersions aqueuses obtenues selon le procédé faisant l'objet de l'une quelconque des revendications précédentes comme liants pour compositions adhésives.

11. Procédé de préparation de compositions adhésives caractérisé en ce qu'on mélange une dispersion aqueuse préparée selon le procédé faisant l'objet de l'une quelconque des revendications 1 à 9 et des adjuvants pour colles selon un rapport pondéral adjuvants/-matière sèche de ladite dispersion aqueuse compris entre 1 et 10.

## Patentansprüche für die Vertragsstaaten: BE, CH, DE, FR, GB, IT, LI, LU, NL, SE

1. Wäßrige Dispersionen synthetischer Harze, dadurch gekennzeichnet, daß sie aus einer Mischung von 20 bis 80 Gew.-% eines Latex eines Copolymeren A aus 40 bis 70 Gew.-% Butadien, 29 bis 55 Gew.-% Styrol und 1 bis 10 Gew.-% wenigstens einer ethylenisch ungesättigten Carbonsäure und aus 80 bis 20 Gew.-% eines Latex eines Copolymeren B aus 30 bis 55 Gew.-% Styrol, 40 bis 65 Gew.-% Alkylacrylat und einer $C_1 - C_8$-Alkylgruppe und 0 bis 10 Gew.-% wenigstens einer ethylenisch ungesättigten Carbonsäure bestehen.

2. Dispersionen nach Anspruch 1, dadurch gekennzeichnet, daß das Copolymere A aus 45 bis 70 Gew.-% Butadien, 40 bis 50 Gew.-% Styrol und 2 bis 5 Gew.-% ethylenisch ungesättigter Carbonsäure besteht.

3. Dispersionen nach Anspruch 1, dadurch gekennzeichnet, daß das Copolymere B aus 35 bis 45 Gew.-% Styrol, 50 bis 60 Gew.-% Alkylacrylat und 1 bis 5 Gew.-% ethylenisch ungesättigter Carbonsäure besteht.

4. Dispersionen nach einem der vorangehenden Ansprüche, dadurch gekennzeichnet, daß das Alkylacrylat ein $C_2 - C_4$-Alkylradikal enthält.

5. Dispersionen nach einem der vorangehenden Ansprüche, dadurch gekennzeichnet, daß die ethylenisch ungesättigte Carbonsäure Acrylsäure, Methacrylsäure, Crotonsäure, Maleinsäure, Fumarsäure, Itaconsäure, Mesaconsäure, Glutaconsäure oder ein Chlorderivat davon ist.

6. Dispersionen nach einem der vorangehenden Ansprüche, dadurch gekennzeichnet, daß sie aus einem Gemisch von 40 bis 60 Gew.-% eines Latex des Copolymeren A und 60 bis 40 Gew.-% eines Latex des Copolymeren B bestehen.

7. Dispersionen nach einen der vorangehenden Ansprüche, dadurch gekennzeichnet, daß sie 40 bis 70 Gew.-% Trockensubstanz enthalten, daß der Latex des Copolymeren A 40 bis 70 Gew.-% Trockensubstanz enthält und daß der Latex des Copolymeren B 40 bis 70 Gew.-% Trockensubstanz enthält.

8. Verwendung der wäßrigen Dispersionen nach einem der vorangehenden Ansprüche als Bindemittel für Kleber-Zusammensetzungen.

9. Kleber-Zusammensetzungen, dadurch gekennzeichnet, daß sie aus einer wäßrigen Dispersion nach einem der Ansprüche 1 bis 9 und aus Hilfsmitteln für Kleber in einem Gewichtsverhältnis Hilfsmittel/Trockensubstanz der wäßrigen Dispersion zwischen 1 und 10 bestehen.

## Patentansprüche für den Vertragsstaat: AT

1. Verfahren zur Herstellung von wäßrigen Dispersionen synthetischer Harze, dadurch gekennzeichnet, daß man 20 bis 80 Gew.-% eines Latex eines Copolymeren A aus 40 bis 70 Gew.-% Butadien, 29 bis 55 Gew.-% Styrol und 1 bis 10 Gew.-% wenigstens einer ethylenisch ungesättigten Carbonsäure und 80 bis 20 Gew.-% eines Latex eines Copolymeren B aus 30 bis 55 Gew.-% Styrol, 40 bis 65 Gew.-% Alkylacrylat mit einer $C_1 - C_8$-Alkylgrupe und 0 bis 10 Gew.-% wenigstens einer ethylenisch ungesättigten Carbonsäure mischt.

2. Verfahren nach Anspruch 1, dadurch gekennzeichnet, daß das Copolymere A aus 45 bis 70 Gew.-% Butadien, 40 bis 50 Gew.-% Styrol und 2 bis 5 Gew.-% ethylenisch ungesättigter Carbonsäure besteht.

3. Verfahren nach Anspruch 1, dadurch gekennzeichnet, daß das Copolymere B aus 35 bis 45 Gew.-% Styrol, 50 bis 60 Gew.-% Alkylacrylat und 1 bis 5 Gew.-% ethylenisch ungesättigter Carbonsäure besteht.

4. Verfahren nach einem der vorangehenden Ansprüche, dadurch gekennzeichnet, daß das Alkylacrylat eine $C_2 - C_4$-Alkylgruppe besitzt.

5. Verfahren nach einem der vorangehenden Ansprüche, dadurch gekennzeichnet, daß die ethylenisch ungesättigte Carbonsäure Acrylsäure, Methacrylsäure, Crotonsäure, Maleinsäure, Fumarsäure, Itaconsäure, Mesaconsäure, Glutaconsäure oder ein Chlorderivat davon ist.

6. Verfahren nach einem der vorangehenden Ansprüche, dadurch gekennzeichnet, daß man 40 bis 60 Gew.-% eines Latex des Copolymeren A und 60 bis 40 Gew.-% eines Latex des Copolymeren B mischt.

7. Verfahren nach einem der vorangehenden Ansprüche, dadurch gekennzeichnet, daß die genannten wäßrigen Dispersionen zwischen 40 und 70 Gew.-%, daß der Latex des Copolymeren A 40 bis 70 Gew.-% und daß der Latex des Copolymeren B 40 bis 70 Gew.-% Trockensubstanz enthalten.

8. Verfahren nach einem der vorangehenden Ansprüche, dadurch gekennzeichnet, daß die Mischung bei einer Temperatur zwischen 10 und 80° C hergestellt wird.

9. Verfahren nach Anspruch 10, dadurch gekennzeichnet, daß die Mischung bei einer Temperatur zwischen 20 und 30° C hergestellt wird.

10. Verwendung der erhaltenen wäßrigen Dispersionen nach einem der vorangehenden Ansprüche als Bindemittel für Kleber-Zusammensetzungen.

11. Verfahren zur Herstellung von Kleber-Zusammensetzungen, dadurch gekennzeichnet, daß man eine nach dem Verfahren nach einem der Ansprüche 1 bis 9 hergestellte wäßrige Dispersion und Hilfsmittel für Kleber in einem Gewichtsverhältnis Hilfsmittel/Trockensubstanz der wäßrigen Dispersion zwischen 1 und 10 mischt.

## Claims for the Contracting States: BE, CH, DE, FR, GB, IT, LI, LU, NL, SE

1. Aqueous dispersions of synthetic resins characterised in that they comprise a mixture of from 20 to 80% by weight of a latex of a copolymer A comprising from 40 to 70% by weight of butadiene, from 29 to 55% by weight of styrene and from 1 to 10% by weight of at least one ethylenically unsaturated carboxylic acid, and from 80 to 20% by weight of a latex of a copolymer B comprising from 30 to 55% by weight of styrene, from 40 to 65% by weight of alkyl acrylate having a $C_1 - C_8$ alkyl radical and from 0 to 10% of at least one ethylenically unsaturated carboxylic acid.

2. Dispersions according to claim 1 characterised in that the copolymer A comprises from 45 to 70% by weight of butadiene, from 40 to 50% by weight of styrene and from 2 to 5% of ethylenically unsaturated carboxylic acid.

3. Dispersions according to claim 1 characterised in that the copolymer B comprises from 35 to 45% by weight of styrene, from 50 to 60% by weight of alkyl acrylate and from 1 to 5% by weight of ethylenically unsaturated carboxylic acid.

4. Dispersions according to any one of the preceding claims characterised in that the alkyl acrylate has a $C_2 - C_4$ alkyl radical.

5. Dispersions according to any one of the preceding claims characterised in that the ethylenically unsaturated carboxylic acid is acrylic, methacrylic, crotonic, maleic, fumaric, itaconic, mesaconic and glutaconic acid or chlorinated derivatives thereof.

6. Dispersions according to any one of the preceding claims characterised in that they comprise a mixture of from 40 to 60% by weight of a latex of copolymer A and from 60 to 40% by weight of a latex of copolymer B.

7. Dispersions according to any one of the preceding claims characterised in that they contain from 40 to 70% of dry matter, that the latex of copolymer A contains from 40 to 70% of dry matter and that the latex of copolymer B contains from 40 to 70% of dry matter.

8. Use of the aqueous dispersions in accordance with any one of the preceding claims as binders for adhesive compositions.

9. Adhesive compositions characterised in that they comprise an aqueous dispersion in accordance with any one of claims 1 to 9 and adjuvants for glues with an adjuvants/dry matter ration by weight in said aqueous dispersion of between 1 and 10.

## Claims for the contracting State: AT

1. A process for the preparation of aqueous dispersions of synthetic resins characterised by mixing from 20 to 80% by weight of a latex of a copolymer A comprising from 40 to 70% by weight of butadiene, from 29 to 55% by weight of styrene and from 1 to 10% by weight of at least one ethylenically unsaturated carboxylic acid, and from 80 to 20% by weight of a latex of a copolymer B comprising from 30 to 55% by weight of styrene, from 40 to 65% by weight of alkyl acrylate having a $C_1 - C_8$ alkyl radical and from 0 to 10% of at least one ethylenically unsaturated carboxylic acid.

2. A process according to claim 1 characterised in that the copolymer A comprises from 45 to 70% by weight of butadiene, from 40 to 50% by weight of styrene and from 2 to 5% of ethylenically unsaturated carboxylic acid.

3. A process according to claim 1 characterised in that the copolymer B comprises from 35 to 45% by weight of styrene, from 50 to 60% by weight of alkyl acrylate and from 1 to 5% by weight of ethylenically unsaturated carboxylic acid.

4. A process according to any one of the preceding claims characterised in that the alkyl acrylate has a $C_2 - C_4$ alkyl radical.

5. A process according to any one of the preceding claims characterised in that the ethylenically unsaturated carboxylic acid is acrylic, methacrylic, crotonic, maleic, fumaric, itaconic, mesaconic and glutaconic acid or chlorinated derivatives thereof.

6. A process according to any one of the preceding claims characterised by mixing from 40 to 60% by weight of a latex of copolymer A and from 60 to 40% by weight of a latex of copolymer B.

7. A process according to any one of the preceding claims characterised in that said aqueous dispersions contain from 40 to 70% of dry matter, that the latex of copolymer A contains from 40 to 70% of dry matter and that the latex of copolymer B contains from 40 to 70% of dry matter.

8. A process according to any one of the preceding claims characterised in that mixing is effected at a temperature of from 10 to 80° C.

9. A process according to claim 10 characterised in that mixing is effected at a temperature of from 20 to 30° C.

10. Use of the aqueous dispersions produced by the process in accordance with any one of the preceding claims as binders for adhesive compositons.

11. A process for the preparation of adhesive compositions characterised by mixing an aqueous dispersion prepared by the process in accordance with any one of claims 1 to 9 and adjuvants for glues with an adjuvants/dry matter ratio by weight in said aqueous dispersion of between 1 and 10.